# EUROPEAN PATENT SPECIFICATION

(11) **EP 1 041 837 B1**
(45) Date of publication and mention of the grant of the patent: **19.12.2012**
(21) Application number: 00106215.7
(22) Date of filing: 22.03.2000
(51) Int. Cl.: H04W 48/18, H04W 36/00

(54) **Mobile station and mobile communication system**
Mobilstation und Mobilkommunikationssystem
Station mobile et système de communication mobile

(30) Priority: 01.04.1999 EP 99106725
(43) Date of publication of application: 04.10.2000
(73) Proprietor: SIEMENS AKTIENGESELLSCHAFT, 80333 München (DE)
(72) Inventor: Laumen, Josef, 31141 Hildesheim (DE); Bisgaard, Peter, 9440 Aabybro (DK)

(56) References cited:
- WO-A-94/06219
- WO-A-96/33587
- BREMER R: "INTER-PLMN HANDOVER - AN APPROACH FOR A FUNCTIONAL REQUIREMENT DESCRIPTION" 1995 FOURTH IEEE INTERNATIONAL CONFERENCE ON UNIVERSAL PERSONAL COMMUNICATIONS RECORD, GATEWAY TO THE 21ST. CENTURY TOKYO, NOV. 6 - 10, 1995, no. CONF. 4, 6 November 1995 (1995-11-06), pages 442-446, XP000689990 INSTITUTE OF ELECTRICAL AND ELECTRONICS ENGINEERS ISBN: 0-7803-2955-4

## Description

### ,Field of the invention

The invention relates to a mobile station, to a network, to a mobile communication system and a base station with the generic features of the independent patent claims.

### Background art

Known are mobile communication systems that comprise base stations and mobile stations. An example for such a mobile communication system is the GSM system, used all over Europe.

A GSM system mobile communication system comprises base stations, each base station covering a limited geographical area. When a mobile station moves out of the geographical area of a first base station, the connection to the base station is terminated and a new connection to another base station is established. This process is called handover. In the GSM system, the handover procedure is initiated by the network, which means that the user of a mobile station has no control of which base stations he is connected to.

International application WO 94/06219 discloses a system enabling the user to manually prevent performing a location update and attempts to perform a location update between two different networks.

### Advantages of the invention

An advantage of a mobile station, network, communication system and base station according to the features of the independent patent claims is that a user can determine which base stations are used for the connection of the mobile with the communication system. This allows the user to select a specific cost and service profile.

Further advantages arise from the features of the dependent patent claims. The invention is especially useful if the two groups of base stations belong to different network operators. To inform the network about the selection of the user, the mobile station sends a message to the base station. This is especially useful if the base station has a possibility to command the mobile station to connect to another base station. Furthermore it is useful that the mobile station monitors only the signal strengths of base stations that are possible candidates for a connection thereto.

### Drawings

Embodiments of the invention are shown in the drawings and described in more detail in the description.
Figure 1 shows a communication system with base stations and a mobile station; and
Figure 2 shows the data format of a message from the mobile station to the base station.

### Description

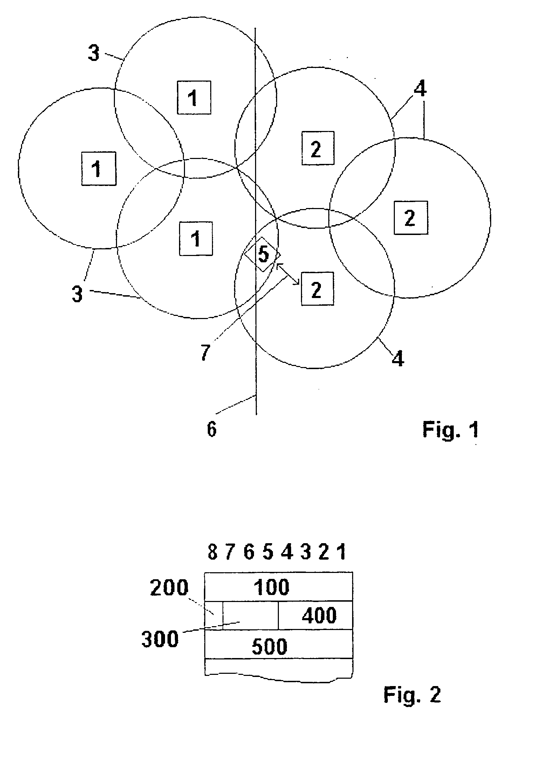

Figure 1 shows a mobile communication system comprising a first group 1 of base stations, a second group 2 of base stations, and a mobile station 5. Each of the base stations in the first and second group 1, 2 covers a limited geographical area that is indicated by circles 3, 4 around the base stations 1, 2. In real life, the covered area is not necessary a circle. Within these geographical areas 3, 4, the mobile station 5 can establish a wireless connection as shown by the arrow 7. The arrow 7 indicates that the mobile station 5 is connected to a base station 2 so that the mobile station 5 and the base station 2 can exchange information, especially telephone calls or data transmissions.

If the mobile station 5 moves, it will eventually leave the geographical area covered by a specific base station and there are then some mechanism to terminate the connection of the mobile station 5 to the old base station and establish a new connection to a new base station. This process is called handover. A plurality of base stations work together in the form of a network so that the user does normally not realize that his connection has been handed over from one base station to another base station. If the user has an ongoing telephone call the connection will also be transferred from the old base station to the new base station, so that the user does not realize the handover.

As an example Figure 1 shows a situation with two different groups 1, 2 of base stations form two different networks, because they are separated by a political border 6. Since each country has his own national telecommunication institute that allocates the use of radio frequencies, this is a typical situation where base stations of a different network operators are in close proximity to each other. When the user travels with his mobile station 5 along the political borders 6 there might arise the situation that the connection to a base station of a group 1 is much better than to the base stations of a group 2. Although the connection is much better the user might not want his mobile station 5 to be handed over from the group 2 to the group 1, for example if the service charge of the network of the base stations of group 1 is much higher than the service charge of the base stations of group 2. The invention therefore suggests that the user can determine to which group of base stations 1, 2 the mobile station 5 can connect to.

There are different methods for how the user can determine to which base stations his mobile station can connect to. A first method comprises an extra mode in the mobile station so that the user can select different groups of base stations he wants his mobile stations 5 to establish connections with. Normally, selecting a group of base stations is equivalent to selecting a network operator. This is today the case with the GSM system. In future applications, for example in the UMTS system, it might also be possible that a network operator has a base station with different services and the user might select that his mobile station should only be able to communicate with a specific type of base station.

Figure 2 shows a possible data format of the information to which groups of base stations a mobile station can connect to. Above the data are the numbers 8 to 1 indicating the bits of the data. The number 8 stands for the most significant bit and 1 for the least significant bit. A first data field 100 comprises 8 bits and contains information about the length of the total data. The most significant bit (bit 8) of the second byte is a bit which is set to one if the user wants to allow connections to different groups of base stations. If the bit is set to 0, the user does not allow the mobile station to connect to different groups of base stations. The next data field 300 comprises three bits indicating what type of restriction related to the connection to different groups of base stations should be used. If these three bits are set at 0 then there are no restrictions. If the data field 200 comprises a one and data field 300 comprises only 0's then the network is free to hand the mobile station over to any base station which can establish a connection. By setting different bits of the data field 300 different type of restrictions can be signalled. The data fields 400 and 500 comprise further information related to a restricted access to network operators, for example code numbers indicating to which operators the mobile stations can connect. If the handover from one group of base stations to another group of base stations is initiated by the base stations then the information field as shown in Figure 2 should be communicated from the mobile station 5 to the base station to which the mobile station 5 is currently connected.

The invention relates to a protocol for enabling and disabling handover between mobile networks (also called seamless roaming). This is described with reference to the GSM system, but the idea is applicable in other types of cellular telecommunication systems such as UMTS as well.

An essential feature in the cellular mobile telephony systems of today is the ability to transfer a call from one base station to another one. The mobile station is connected to one or more base stations through a radio connection, and the call is then transferred from one base station to another, or from one set of base stations to another. This technique is called handover, and it is described in detail in GSM 04.08, section 3.4.4 (ETS 300 557) and GSM 05.08 (ETS 300 578).

In the GSM system, the handover procedure is completely controlled by the network. The base station, which the mobile is connected to, provides the mobile with a list of radio frequencies. The mobile station must then search for and monitor all these frequencies. During a call the mobile station continuously reports the received signal strength for the best frequencies to the network, which can then evaluate whether any of the reported base stations would be better than the one currently used. The process of making measurements of other base stations is called neighbour station monitoring and the reporting of the neighbour base stations to the network is called measurement reporting.

In case a better base station is found, the network commands the mobile to change to the new base station. It is said that the mobile is handed over to the new and better base station. In this manner it is possible to maintain a conversation while moving around, and it is a very essential feature in mobile communication systems. It is also technically possible to let the mobile decide when to make handovers, even though the current GSM system only supports network controlled handover.

The current GSM specifications state two methods for selecting the network on which the mobile can obtain service: An automatic mode and a manual mode (see GSM 02.11 (ETS 300 507) and GSM 03.22 (ETS 300 535). In the automatic selection mode, the mobile station chooses the network automatically without any kind of interference from the user. Different methods can be used for giving higher priority to some networks, e.g., the last used network can be given a higher priority, or the network with the best received signal strength can be given a higher priority. In the manual selection mode, the user himself specifies which network the mobile station should enter service on. The mobile makes a search for the networks currently available and presents this list of networks for the user, who can then choose one. The mobile must then attempt to enter service on the chosen network, and the mobile is not allowed to make attempts for entering service on other networks than the chosen one.

Other types of manual selection mode is possible, for instance it is possible to implement a manual mode where the country is selected manually. The mobile station must then only enter service on networks belonging to the selected country. Another possibility would be to let the user make a list of the networks he wanted to use. The mobile station would then only be allowed to enter service on networks in this list.

It is today very common for the network operators to make agreements such that a subscriber from one network can enter service on another network and still be able to make and receive calls. When a subscriber enters service on another network than the one he subscribes to, it is said that he is roaming on the other network, and the agreements between networks that makes this possible are called roaming agreements.

In the current GSM standards, it is only specified how handovers between base stations belonging to one network operator is working. It is not stated how to make handover between two network operators. In 1998, the network operator Telia in Denmark has started experiments with handovers between network operators. In this case, the call is transferred from a base station of one network operator to be continued on a base station of another network operator. This is called seamless roaming. The reason that this is smart is that in case a mobile moves out of coverage from one network and into the coverage area of another network, the call will be dropped without the seamless handover feature even if the networks has roaming agreements. In this case the user will have to establish his call again to continue it. With seamless roaming, the user simply continues his conversation as if nothing had happened.

There is - for the user - one big drawback of the seamless roaming feature: Both making and receiving calls can be considerably more expensive in roaming situations. Depending on the exact subscription options, the price of the call could be considerably more expensive after the seamless roaming handover has been carried out. This means that the user is not always interested in using the seamless roaming feature, especially if he isn't moving into the other country, but only moving around in a border area. Another argument is that when the manual network selection mode is used, it is very illogical that the mobile is handed over to another network, as he specifically has requested to use one network and not others. There is currently no mechanism in the GSM standards to prohibit that the network commands the mobile to make handover to another network, and as the handover feature is essential and mandatory, the mobile must carry out the handover procedure.

The invention provides a method for communicating the information from the mobile station to the network whether the seamless roaming feature is switched on or off. The network can then take this information into consideration when deciding when to make handovers and to which base stations the mobile station can be handed over. The seamless roaming feature can then be an option in the mobile station's man machine interface which can be switched on or off. Furthermore, the mobile station could be implemented such that in case some kind of manual selection mode is chosen, the feature can be implemented such that seamless roaming is only accepted to the networks that is manually chosen.

This invention is a possible addition to the solution for seamless roaming which Telia has made experiments with in Denmark. The solution implemented by Telia works completely independent of the mobile station, whereas this invention affects both the mobile station and the network.

This invention makes it possible to switch seamless roaming on or off, and it thereby makes mobile terminals more user friendly. It will also prohibit a lot of protests from the users to the networks when the users gets phone bills that are too high.

In all types of digital cellular systems, a call is established and maintained by exchanging a number of messages between the mobile station and the network. Each of these messages has a specific purpose, e.g., the mobile station can tell the network which number it is calling, or acknowledge that ciphering has been switched on. Typically, a mobile station will, in the beginning of a call setup, tell the network something about itself, e.g., how much power it is capable of sending with, which frequency bands it supports and so on.

For the network to be able to avoid seamless roaming, the information of whether the mobile accepts handovers to different networks must be exchanged as early as possible in the call setup, as the handover otherwise might occur before the information has been transferred. The mobile station must have a store internally, where the current value of the seamless roaming option is stored. The contents of this memory must then be transferred from the mobile station to the network during the call setup. It can either be communicated using a special message containing only this information, or as a part of another message.

Two methods are provided for setting up whether seamless handover is possible or not.

Whenever a manual network selection mode of some type is chosen, the mobile could automatically switch off seamless roaming by modifying the store containing the seamless roaming setting.

The seamless roaming feature can be switched on or off by a separate menu item. The user can enter this menu by using the mobile station's man machine interface and select, e.g., seamless roaming on or seamless roaming off. The mobile station must modify the contents of the store containing the seamless roaming setting.

When this store is communicated to the network in the call setup, the mobile terminal must only be commanded to perform handover to a network which is one of the manually chosen ones. The network must command the mobile station to perform neighbour station monitoring only on frequencies which matches the current setting of the seamless roaming feature.

A further possibility to communicate the status of the seamless roaming feature between the mobile station and the network is to exchange a message only if there is an alternation of the status. The mobile station and the fixed network both contain a memory in which the status of the seamless roaming feature is stored. A message is only exchanged if the user of the mobile telephone wants to change the status of the seamless roaming feature. So only if the user of the mobile telephone has decided that he wants to alternate the present status of the seamless roaming feature a message containing that information is send to the fixed network. The advantage of this method is that the number of messages changed between the mobile station and the fixed network is reduced. The information about the seamless roaming feature is stored in the fixed network and it is preferred that it is stored together with all the other information that is needed by the fixed network to enable an communication with the user of the mobile station. In the GSM system the information about a user of the mobile system is stored in the home location register HLR that is stored at an central computer of the network operator. Temporarily copies of most of the information contained in the HLR are used in the visitor location register VLR that is used by the base station which is actually exchanging radio messages with the mobile station. Both storages can be used to store the information about the seamless roaming feature.

It is also possible to use this invention during a call. The mobile station could allow the user to change the seamless roaming setting during the call. The mobile station must then again modify the local store according to the users wish, and send a message to the network indicating that the setting has been changed. The network must then act by adding or removing base stations from the list of frequencies to monitor, and send the new list to the mobile station.

In Figure 1 a possible handover situation between two networks in the GSM system is illustrated. The mobile has a call running, and is connected to a base station. If the seamless roaming feature is to work, the mobile station must be commanded to measure and report also on the frequencies of the base stations in group1, apart from the usual measuring on the base stations in group 2. In case a base station in group 1 is better in terms of the received signal strength than the base station the mobile is connected to, the mobile is commanded to handover to a base station in group 1. Some interaction between the two networks is also required.

## Claims

1. Mobile station (5) for the exchange of information with base stations (1, 2), each base station (1, 2) covering a limited geographical area (3, 4), wherein the mobile station (5) is capable to change a connection from a base station (1) to another base station (2),
and wherein the mobile station (5) comprises means for a user of the mobile station (5) to determine at least one group of base stations to which the mobile station can connect to, **characterized in, that**
said mobile station sends an information (100, 200, 300, 400, 500) to a network communicating said determination.

2. Mobile station (5) according to claim 1, **characterized in, that** the group of base stations is determined by indicating to which network operators the mobile station can connect.

3. Mobile station (5) according to claim 1 or 2, **characterized in, that** said information (100, 200, 300, 400, 500) is sent in response to the user of the mobile station (5) changing a status of a seamless roaming feature.

4. Mobile station (5) according to claim 1 or 2, **characterized in, that** said information (100, 200, 300, 400, 500) is sent in response to the mobile station (5) setting up a call.

5. Mobile station (5) according to claim 1, **characterized in, that** the group of base stations is determined by indicating a specific type of base station.

6. Network of a mobile communication system,
comprising base stations, each base station covering a limited geographical area (3, 4) of said mobile communication system, **characterized in, that** it comprises means for
a) receiving information (100, 200, 300, 400, 500) from a mobile station (5) being currently connected to a base station of the network, said information indicating at least one group of base stations to which the mobile station can connect to,
b) disabling a seamless roaming feature of said mobile station (5) according to said information.

7. Network according to claim 6, **characterized in, that** the group of base stations is determined by indicating to which network operators the mobile station can connect.

8. Network according to claim 6 or 7, **characterized in, that** the network commands the mobile station (5) to perform neighbour base station monitoring only on frequencies which match the current setting of the seamless roaming feature.

9. Communication system, comprising:
a mobile station (5) according to any one of the preceding claims 1 to 5; and
a network according to any one of claims 6 to 8.

10. Base Station of a mobile communication system, said base station covering a limited geographical area (3, 4) of said mobile communication system, **characterized in, that** it comprises means for receiving information (100, 200, 300, 400, 500) from a mobile station (5) which is currently connected to said base station, said information indicating at least one group of base stations to which the mobile station can connect to.

11. Base Station according to claim 10, **characterized in, that** said group of base stations is determined by indicating to which network operators the mobile station (5) can connect.

## Patentansprüche

1. Mobilstation (5) zum Austausch von Informationen mit Basisstationen (1, 2), wobei jede Basisstation (1, 2) ein begrenztes geographisches Gebiet (3, 4) abdeckt, wobei die Mobilstation (5) in der Lage ist, eine Verbindung von einer Basisstation (1) zu einer anderen Basisstation (2) umzulegen, und wobei die Mobilstation (5) Mittel für einen Benutzer der Mobilstation (5) umfasst, um mindestens eine Gruppe von Basisstationen zu bestimmen, mit welchen die Mobilstation in Verbindung treten kann, **dadurch gekennzeichnet, dass** die besagte Mobilstation eine Information (100, 200, 300, 400, 500) an ein Netz sendet, welches die besagte Bestimmung übermittelt.

2. Mobilstation (5) nach Anspruch 1, **dadurch gekennzeichnet, dass** die Gruppe von Basisstationen bestimmt wird, indem angegeben wird, mit welchen Netzbetreibern die Mobilstation in Verbindung treten kann.

3. Mobilstation (5) nach Anspruch 1 oder 2, **dadurch gekennzeichnet, dass** die besagte Information (100, 200, 300, 400, 500) in Reaktion darauf gesendet wird, dass der Benutzer der Mobilstation (5) einen Status eines Leistungsmerkmals "nahtloses Roaming" ändert.

4. Mobilstation (5) nach Anspruch 1 oder 2, **dadurch gekennzeichnet, dass** die besagte Information (100, 200, 300, 400, 500) in Reaktion darauf gesendet wird, dass die Mobilstation (5) eine Verbindung aufbaut.

5. Mobilstation (5) nach Anspruch 1, **dadurch gekennzeichnet, dass** die Gruppe von Basisstationen bestimmt wird, indem ein spezieller Typ von Basisstationen angegeben wird.

6. Netz eines Mobilkommunikationssystems,
welches Basisstationen umfasst, wobei jede Basisstation ein begrenztes geographisches Gebiet (3, 4) des besagten Mobilkommunikationssystems abdeckt, **dadurch gekennzeichnet, dass** es Mittel umfasst zum
a) Empfangen von Informationen (100, 200, 300, 400, 500) von einer Mobilstation (5), die gegenwärtig mit einer Basisstation des Netzes verbunden ist, wobei die besagten Informationen mindestens eine Gruppe von Basisstationen angeben, mit welchen die Mobilstation in Verbindung treten kann,
b) Deaktivieren eines Leistungsmerkmals "nahtloses Roaming" der besagten Mobilstation (5) entsprechend den besagten Informationen.

7. Netz nach Anspruch 6, **dadurch gekennzeichnet, dass** die Gruppe von Basisstationen bestimmt wird, indem angegeben wird, mit welchen Netzbetreibern die Mobilstation in Verbindung treten kann.

8. Netz nach Anspruch 6 oder 7, **dadurch gekennzeichnet, dass** das Netz die Basisstation (5) anweist, eine Überwachung von Nachbar-Basisstationen nur auf Frequenzen durchzuführen, welche der aktuellen Einstellung des Leistungsmerkmals "nahtloses Roaming" entsprechen.

9. Kommunikationssystem, welches umfasst:
eine Mobilstation (5) nach einem der vorhergehenden Ansprüche 1 bis 5; und
ein Netz nach einem der Ansprüche 6 bis 8.

10. Basisstation eines Mobilkommunikationssystems, wobei die besagte Basisstation ein begrenztes geographisches Gebiet (3, 4) des besagten Mobilkommunikationssystems abdeckt, **dadurch gekennzeichnet, dass** sie Mittel zum Empfangen von Informationen (100, 200, 300, 400, 500) von einer Mobilstation (5), welche gegenwärtig mit der besagten Basisstation verbunden ist, umfasst, wobei die besagten Informationen mindestens eine Gruppe von Basisstationen angeben, mit welchen die Mobilstation in Verbindung treten kann.

11. Basisstation nach Anspruch 10, **dadurch gekennzeichnet, dass** die besagte Gruppe von Basisstationen bestimmt wird, indem angegeben wird, mit welchen Netzbetreibern die Mobilstation (5) in Verbindung treten kann.

## Revendications

1. Une station mobile (5) destinée à l'échange d'informations avec des stations de base (1, 2), chaque station de base (1, 2) couvrant une zone géographique limitée (3, 4), dans laquelle la station mobile (5) est capable de modifier une connexion d'une station de base (1) à une autre station de base (2),
et dans laquelle la station mobile (5) comprend un moyen pour un utilisateur de la station mobile (5) de déterminer au moins un groupe de stations de base auxquelles la station mobile peut se connecter, **caractérisée en ce que**
ladite station mobile envoie une information (100, 200, 300, 400, 500) à un réseau communiquant ladite détermination.

2. Une station mobile (5) selon la revendication 1, **caractérisée en ce que** le groupe de stations de base est déterminé en indiquant à quels opérateurs de réseau la station mobile peut se connecter.

3. Une station mobile (5) selon la revendication 1 ou 2, **caractérisée en ce que** ladite information (100, 200, 300, 400, 500) est envoyée en réponse à l'utilisateur de la station mobile (5) modifiant un état d'une fonction d'itinérance transparente.

4. Une station mobile (5) selon la revendication 1 ou 2, **caractérisée en ce que** ladite information (100, 200, 300, 400, 500) est envoyée en réponse à la station mobile (5) établissant un appel.

5. Une station mobile (5) selon la revendication 1, **caractérisée en ce que** le groupe de stations de base est déterminé en indiquant un type spécifique de station de base.

6. Un réseau d'un système de communication mobile comprenant des stations de base, chaque station de base couvrant une zone géographique limitée (3, 4) dudit système de communication mobile, **caractérisé en ce qu'**il comprend un moyen de
a) réception d'une information (100, 200, 300, 400, 500) provenant d'une station mobile (5) qui est actuellement reliée à une station de base du réseau, ladite information indiquant au moins un groupe de stations de base auxquelles la station mobile peut se connecter,
b) la désactivation d'une fonction d'itinérance transparente de ladite station mobile (5) en fonction de ladite information.

7. Un réseau selon la revendication 6 **caractérisé en ce que** le groupe de stations de base est déterminé en indiquant à quels opérateurs de réseau la station mobile peut se connecter.

8. Un réseau selon la revendication 6 ou 7 **caractérisé en ce que** le réseau ordonne à la station mobile (5) d'exécuter une surveillance de station de base voisine uniquement sur des fréquences qui correspondent au réglage actuel de la fonction d'itinérance transparente.

9. Un système de communication, comprenant :
une station mobile (5) selon l'une quelconque des revendications 1 à 5, et
un réseau selon l'une quelconque des revendications 6 à 8.

10. Une station de base d'un système de communication mobile, ladite station de base couvrant une zone géographique limitée (3, 4) dudit système de communication mobile, **caractérisée en ce qu'**elle comprend un moyen de réception d'une information (100, 200, 300, 400, 500) provenant d'une station mobile (5) qui est actuellement reliée à ladite station de base, ladite information indiquant au moins un groupe de stations de base auxquelles la station mobile peut se connecter.

11. Une station de base selon la revendication 10, **caractérisée en ce que** ledit groupe de stations de base est déterminé en indiquant à quels opérateurs de réseau la station mobile (5) peut se connecter.
